# EUROPEAN PATENT APPLICATION

(11) **EP 1 508 898 A1**
(43) Date of publication of application: **23.02.2005**
(21) Application number: 03723284.0
(22) Date of filing: 09.05.2003
(51) Int. Cl.: G11B 7/26, B29C 39/10, B29C 39/36

(54) **MULTI-LAYER RECORDING MEDIUM FORMING METHOD AND DEVICE, AND MULTI-LAYER RECORDING MEDIUM**

(30) Priority: 09.05.2002 JP 2002133743
(71) Applicant: TDK Corporation, Chuo-ku, Tokyo 103-8272 (JP)
(72) Inventor: KANEKO, Yukio, c/o TDK Corporation, Tokyo 103-8272 (JP); MURAKAMI, Yoshiaki, c/o TDK Corporation, Tokyo 103-8272 (JP); YAMAGUCHI, Haruhiko, c/o TDK Corporation, Tokyo 103-8272 (JP); TATSUMI, Yoshiyuki, c/o TDK Corporation, Tokyo 103-8272 (JP); USAMI, Mamoru, c/o TDK Corporation, Tokyo 103-8272 (JP); KOMAKI, Tsuyoshi, c/o TDK Corporation, Tokyo 103-8272 (JP)
(74) Representative: Grünecker, Kinkeldey, Stockmair & Schwanhäusser Anwaltssozietät
(86) International application number: PCT/JP2003/005804
(87) International publication number: WO 2003/096333

(57) **Abstract**

A disk-stamper supplying portion, stamper attaching portion, radiation applying portion, stamper removing portion, and disk discharging portion are arranged in order on the circumference of a plurality of arms. Moreover, in the case of the stamper attaching portion, a stamper is put on a disk and then, the stamper is lowered to the disk in accordance with the pressure of an attaching head. Furthermore, in the case of the stamper removing portion, a pressure is continuously applied along the circumference of a stamper and a stamper is removed from a resin layer along the go-around direction of a disk.

## Description

### Technical Field

The present invention relates to a multilayer recording medium forming method and apparatus and a multilayer recording medium, particularly to a multilayer recording medium forming method and apparatus for attaching or removing a stamper to or from a disk through a resin layer and forming a pit and/or groove structure on the surface of the resin layer, and a multilayer recording medium manufactured by the apparatus.

### .Background Art

Various types of multilayer structured disks are proposed as recording media for the next generation at present.

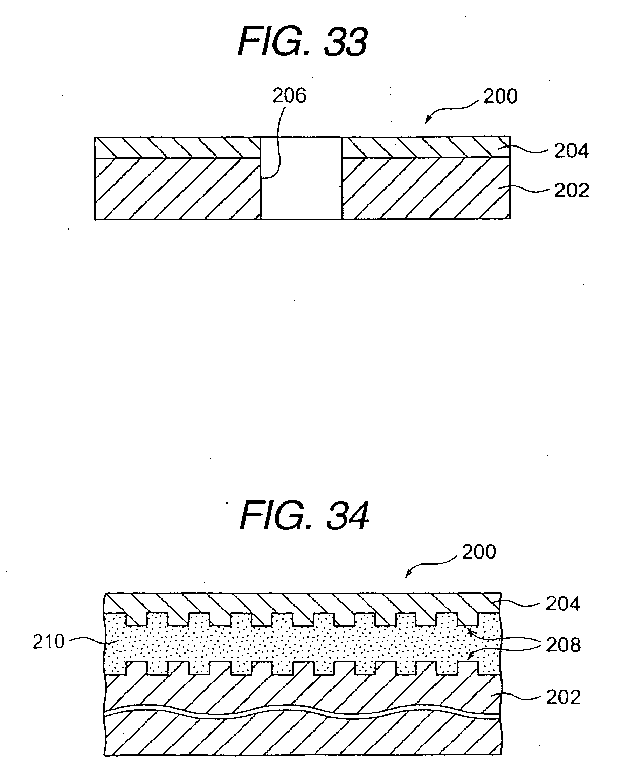

Figure 33 is a schematic sectional view showing a structure of a reproduction-dedicated two-layer disk. As shown in Figure 33, a reproduction-dedicated two-layer disk 200 is constituted by including a base substrate 202 having a thickness of 1.1 mm and forming a light transmission layer 204 having a thickness' of 0.1 mm on either surface of the base substrate 202.

Figure 34 is an enlarged view of the boundary portion between the base substrate and the light transmission layer in Figure 33. As shown in Figure 34, a spiral information pit 208 centering around a center hole 206 (refer to Figure 33) is individually formed on the base substrate 202 and the light transmission layer 204. Moreover, a reflection layer (not illustrated) is formed on surfaces of these information pits 208 through sputtering or vapor deposition and the like and a resin layer 210 is formed between faced information pits 208 so as to fill the irregularity due to the information pits 208.

The two-layer disk thus constituted applies a laser beam from the upper portion of the light transmission layer 204 to perform read.

When forming the information pits 208 or a groove structure on the surface of the resin layer 210 of the above-described multilayer disk, various manufacturing methods are used.

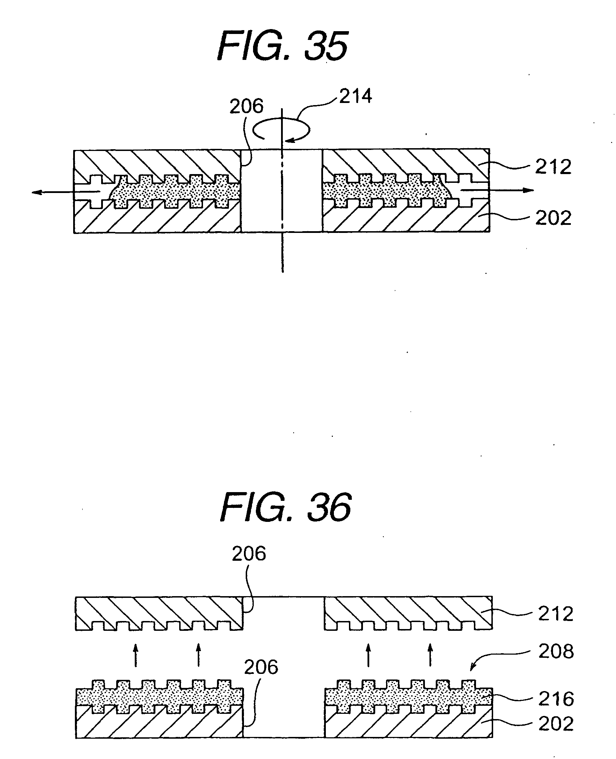

Figures 35 and 36 are step illustrations showing a procedure for forming an information pit by using the spin coating method. To form an information pit by using the spin coating method, first as shown in Figure 35, the base substrate 202 and a light-transmission stamper 212 are mutually attached so as to hold a radiation-curing resin applied to the inner margin side of the base substrate 202 to rotate the base substrate 202 and the stamper 212 about the center hole 206 as shown by the arrow 214.

By rotating the base substrate 202 and stamper 212 together, the radiation-curing resin expands toward the outer periphery of the disk in accordance with the centrifugal force and the gap between the base substrate 202 and the stamper 212 is filled with the radiation-curing resin. After the gap is filled with the radiation-curing resin, radiation is applied from the upper portion of the stamper 212 to form a resin layer 216 by curing the radiation-curing resin.

Then, after the resin layer 216 is formed, the stamper 212 is raised upward as shown in Figure 36 to remove the stamper 212 from the resin layer 216. Thus, when removing the stamper 212 from the resin layer 216, the information pit 208 transferred from the stamper 212 is exposed to the surface of the resin layer 216. Thereafter, a refection layer is formed on the surface of the resin layer 216 through sputtering or vapor deposition and then, a light transmission layer is formed through a method such as spin coating.

In the case of the above conventional example, the procedure for forming the information pit 208 on the surface of the resin layer 216 is described. This method using a stamper is not restricted to formation of the information pit 208. It is needless to say that the method can be applied to formation of a groove structure like disk go-around or to a conformation in which the groove structure is combined with an information pit.

In the attachment of a stamper to a base substrate, the clearance of the stamper to the base substrate must be set so as to be uniform between tens of microns and hundreds of microns. However, when attaching a stamper on a base substrate, the stamper to be attached is approached to the base substrate. In this case, the stamper may be tilted or warped due to the weight of the stamper or the viscous resistance of a radiation-curing resin (so-called resin) previously applied to the inner margin side of a base substrate.

Thus, when the stamper is tilted or warped, the thickness of the radiation-curing resin (so-called resin layer) to be cured between a disk and the stamper differs and as a result, a problem occurs that the position of an upper recording layer does not become constant in the thickness direction.

In the case of removal of the stamper from the base substrate, there is the following problem.

That is, when simultaneously removing the entire face of the stamper 212 from the resin layer 210, a large tensile force is required. Moreover, when the stamper 212 is removed from the resin layer 210, the tensile force is suddenly released. Therefore, the stamper 212 is removed from a holding portion and dropped on the resin layer 210 and the information pit or groove structure 208 may be damaged.

Furthermore, because the stamper 212 is simultaneously removed from the resin layer 210 as described above, it is difficult to adjust the removing speed of the stamper 212 from the resin layer 210 and set an optimum removing speed in order to expose the groove structure 208.

Furthermore, to form the above multilayer recording medium, it is conventionally general to arrange a portion for supplying a disk and stamper, a portion for applying a radiation-curing resin to the inner margin side of the disk, a portion for attaching the stamper to the disk, a portion for curing the radiation-curing resin, a portion for removing the stamper from the disk, and a portion for discharging the disk and stamper on a straight line.

However, when using the above method, there are problems that a manufacturing apparatus extends in the longitudinal direction and the manufacturing apparatus is increased in size. Moreover, to add a new step (for example, a step of cleaning the disk), the manufacturing apparatus is extended in accordance with the added portion of the step. Therefore, it becomes a problem to secure a space for setting the manufacturing apparatus and the labor for air conditioning may increase because the portion for attaching the stamper to the disk or a region for controlling the temperature of the portion for curing the radiation-curing resin increase in order to restrain a dimensional change of the disk.

### Disclosure of the Invention

The present invention is made to solve the above conventional problems and it is the first object of the present invention to provide a multilayer recording medium forming method and apparatus having a stamper removing function for achieving attachment of a stamper making it possible to eliminate a tilt or warpage from stamper to be attached and capable of attaching the stamper to the disk at a uniform clearance, optionally adjusting the removing speed of the stamper from a resin layer, and setting an optimum separating speed, and a multilayer recording medium manufactured by the apparatus.

Moreover, it is the second object of the present invention to provide a multilayer recording medium forming apparatus capable of decreasing the apparatus in size and saving energy and a multilayer recording medium manufactured by the apparatus.

That is, a multilayer recording medium forming method of the present invention includes at least a stamper attaching step of attaching a stamper to the surface of a disk through a resin layer, a step of forming the resin layer by applying radiation while rotating the disk and the stamper, and a stamper step of removing the stamper from the resin layer. Moreover, the outside diameter of the stamper is made larger than that of the disk or the radiation can be transmitted through the stamper.

Moreover, a multilayer recording medium forming method of the present invention is a multilayer recording medium forming method for successively performing a stamper attaching step of attaching a stamper to the surface of a disk through a resin, a resin layer forming step of filling the clearance in accordance with the expansion of the resin by rotating the disk and the stamper, curing the resin, and forming the resin layer, and a stamper removing step of removing the stamper from the resin layer. The method uses a procedure of fixing the disk to a spinner table while fitting a center whole to a centering member protruded from the spinner table to apply the resin to the inner margin side of the disk in the stamper attaching step, then fitting the centering member to the center hole of the stamper, putting the stamper on the disk through the resin and lowering the stamper to the disk side in accordance with the pressure of an attaching head, attracting the stamper by the attaching head after centering the stamper through fitting with the centering member, setting the clearance of the stamper to the disk when the attaching head lowers, and holding the clearance by the centering member, and
fixing the disk in the stamper separating step, then applying a pressure working in the removing direction of the stamper protruded from the outer margin of the disk to an optional position of the stamper, continuously applying a pressure along the circumference of the stamper after removing of the stamper is started from the resin layer in accordance with the pressure, and removing the stamper from the resin layer along the circumferential direction of the disk.

Moreover, a multilayer recording medium forming apparatus of the present invention is a multilayer recording medium forming apparatus having a stamper attaching portion for attaching a stamper to the surface of the disk through a resin, a resin layer forming portion for forming the resin layer by rotating the disk and the stamper and filling the clearance in accordance with expansion of the resin and curing the resin, and a stamper removing portion for removing the stamper from the resin layer, in which
the stamper attaching portion has;
a spinner table having disk attracting means and capable of entirely attracting the either side of the disk,
a centering member protruded from the spinner table to center the disk and the stamper and hold them in the protruding direction,
a dispenser having reciprocally moving means and capable of supplying the resin to the inner margin side of the disk,
an attaching head having stamper attracting means and capable of entirely attracting either side of the stamper, and vertically moving for the spinner table, and
first control means for making the stamper approach the spinner table when the attaching head lowers, bringing the stamper into close contact with the attaching head when the stamper attracting means is activated after the stamper is centered when the center hole is fitted to the centering member, and setting a clearance of the stamper to the disk and
the stamper removing portion is constituted so as to have second control means in which fixing means for holding the disk is included, a plurality of pressure pins capable of vertically moving in the stamper removing direction along the circumferential portion of the stamper protruded from the outer margin of the disk are arranged to press these pressure pins against the stamper along the circumferential direction of the disk, and the vertical movement speed of the pressure pins is adjusted.

Moreover, another multilayer recording medium forming apparatus of the present invention is a multilayer recording medium forming apparatus for attaching and removing a stamper to and from a disk having at least one recording layer through a resin layer on a support base substance having an information recording face and forming a pit and/or groove structure on the surface of the resin layer, in which
a plurality of transfer arms are arranged which respectively hold the disk and the stamper at each arm-portion front end and carry the disk and the stamper along the circumference in accordance with the rotation using the proximal end of each arm as the rotation center,
a disk-stamper supplying portion for supplying the disk and the stamper, a stamper attaching portion for attaching the stamper to the disk, a radiation applying portion for forming a resin layer between the disk and the stamper, a stamper removing section for removing the stamper from the disk, and a disk discharging portion for discharging the disk and the stamper are successively arranged on the circumference of the transfer arms, and
the disks and the stampers bestriding these portions are carried by the transfer arms. Moreover, it is preferable that the transfer arms have a plurality of arm portions so that the disks and the stampers can be carried at the same time.

Moreover, it is preferable that the stamper removing portion has
a rotatable carrying table portion for housing the disks and the stampers along the go-around direction of the disks and the stampers,
the stamper removing operation is performed along the go-around direction of the carrying table portion by arranging a receiving portion for receiving the disks and the stampers, a stamper removing portion for removing the stampers from the disks, an end treating portion for treating an end of a disk after removing a stamper, and
a discharging portion for transferring the disks from the carrying table portion to the disk discharging portion in order to perform the stamper removing operation along the go-around direction of the carrying table portion or
it is preferable that the stamper attaching portion has a rotatable attaching table for housing the disks and the stampers along the go-around direction of the disks and stamper and a temporary-curing radiation applying portion is set along the go-around direction of the attaching table to temporarily cure the resin held by the disks and the stampers. Moreover, it is preferable to compart a region including the stamper attaching portion and the temporary-curing radiation applying portion, use the region as a temperature adjustment region, and set the temperature adjustment region to a constant temperature.

### Brief Description of the Drawings

Figure 1 is a schematic top view of a groove forming apparatus when applying the forming apparatus of the multilayer recording medium forming apparatus of this embodiment to groove formation;
Figure 2 is an enlarged view of the stamper attaching portion in Figure 1;
Figure 3 is a B-B sectional view in Figure 2;
Figure 4 is an enlarged view of the essential portion in Figure 3;
Figure 5 is an enlarged view of the stamper removing portion in Figure 1;
Figure 6 is a sectional view taken along the line A-A in Figure 5;
Figure 7 is a side view showing a structure of a removing station;
Figure 8 is an enlarged view of an essential portion showing a state in which the cutting edge of a cutter reaches the boundary between a disk and a stamper;
Figure 9 is a local side view showing a structure of a stamper removing portion;
Figure 10 is an enlarged view of the essential portion in Figure 9 showing a state immediately after a removing pin contacts a stamper;
Figure 11 is a side view showing a structure of an end face treating portion;
Figure 12 is an enlarged view of the essential portion in Figure 11;
Figure 13 is an enlarged view of an essential portion showing a disk-stamper supplying portion;
Figure 14 is an illustration showing a structure of a stamper discharging chute;
Figure 15 is an illustration showing a structure of a stamper discharging chute;
Figure 16 is a state illustration showing a state in which a disk and a stamper pass through a stamper attaching portion;
Figure 17 is a state illustration showing a state in which a disk and a stamper pass through a stamper attaching portion;
Figure 18 is a state illustration showing a state in which a disk and a stamper pass through a stamper attaching portion;
Figure 19 is a state illustration showing a state in which a disk and a stamper pass through a stamper attaching portion;
Figure 20 is a state illustration showing a state in which a disk and a stamper pass through a stamper attaching portion;
Figure 21 is a state illustration showing a state in which a disk and a stamper pass through a stamper attaching portion;
Figure 22 is a state illustration showing a state in which a disk and a stamper pass through a stamper attaching portion;
Figure 23 is a graph showing a relation between lowering distances of an attaching head and times;
Figure 24 is a sectional illustration showing another embodiment of a centering member;
Figure 25 is a state illustration showing a state in which a disk and a stamper pass through a stamper removing portion;
Figure 26 is a state illustration showing a state in which a disk and a stamper pass through a stamper removing portion;
Figure 27 is a state illustration showing a state in which a disk and a stamper pass through a stamper removing portion;
Figure 28 is a state illustration showing a state in which a disk and a stamper pass through a stamper removing portion;
Figure 29 is a state illustration showing a state in which a disk and a stamper pass through a stamper removing portion;
Figure 30 is a state illustration showing a state in which a disk and a stamper pass through a stamper removing portion;
Figure 31 is an illustration showing a stamper removing state;
Figure 32 is an enlarged view of an essential portion showing an applied example of a stamper removing portion;
Figure 33 is a schematic sectional view showing a structure of a read-only two-layer disk;
Figure 34 is an enlarged view of the boundary portion between the base substrate and the light transmission layer in Figure 33;
Figure 35 is a step illustration showing a procedure for forming an information pit by using the spin coating method; and
Figure 36 is a step illustration showing a procedure for forming an information pit by using the spin coating method.

### Best Mode for Carrying Out the Invention

A multilayer recording medium forming method and apparatus of the present invention and specific embodiments preferable for a multilayer recording' medium are described below in detail by referring to the' accompanying drawings.

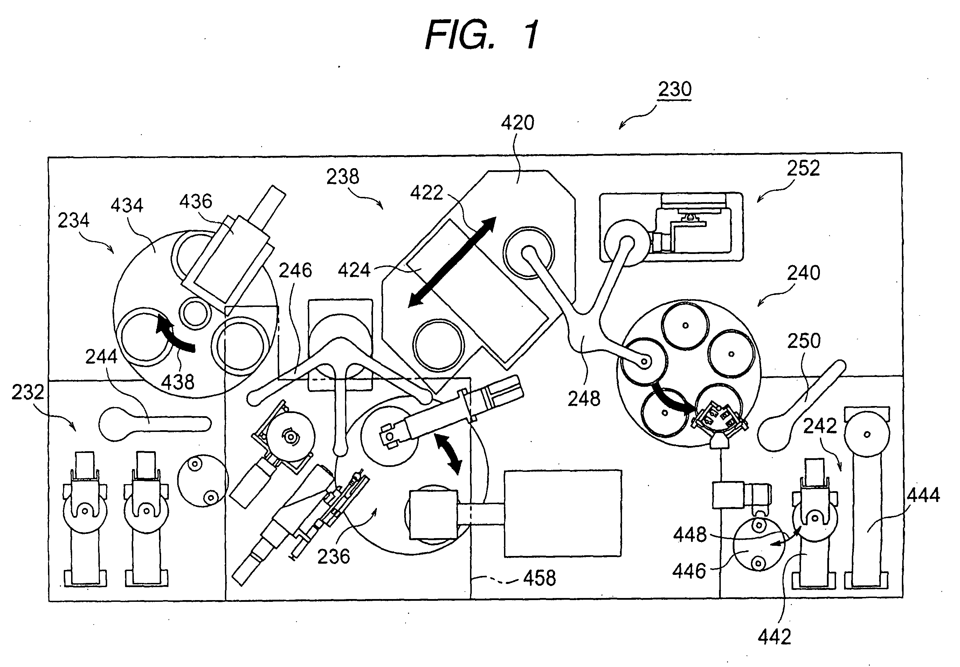

Figure 1 is a schematic top view of a groove forming apparatus when a multilayer recording medium forming apparatus of the present invention is applied to groove formation. In the case of this embodiment, a groove forming apparatus is used as an apparatus for forming a multilayer medium. However, the apparatus is not restricted to formation of a groove structure. It is also allowed to use the apparatus to form an information pit like disk go-around instead of the groove structure or form the groove structure and the information pit by combining them.

A groove forming apparatus 230 to which the stamper attaching apparatus of this embodiment is applied as a stamper attaching portion forms a groove structure at the upper-layer recording side of a rewritable two-layer disk which provides a multilayer recording medium. Moreover, as shown in Figure 1, the groove forming apparatus 230 includes a disk-stamper supplying portion 232 for supplying a disk and a stamper, a cleaner portion 234 for cleaning the surface of the disk, stamper attaching portion 236 for attaching a stamper to the above disk, a radiation applying portion 238 for curing the radiation-curing resin between the disk and the stamper to form a resin layer, a stamper removing portion 240 for removing the stamper from the disk, and a disk discharging portion 242 for discharging the disk and stamper. Moreover, a supply arm 244, first transfer arm 246, second transfer arm 248, and discharge arm 250 are set between these components so that the disk and stamper can be carried to the rear stage side in accordance with the rotation of these arms.

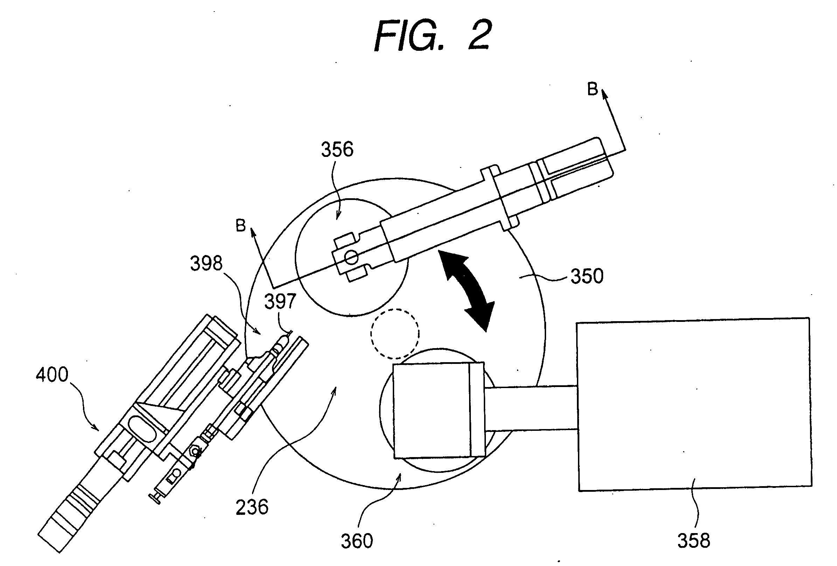

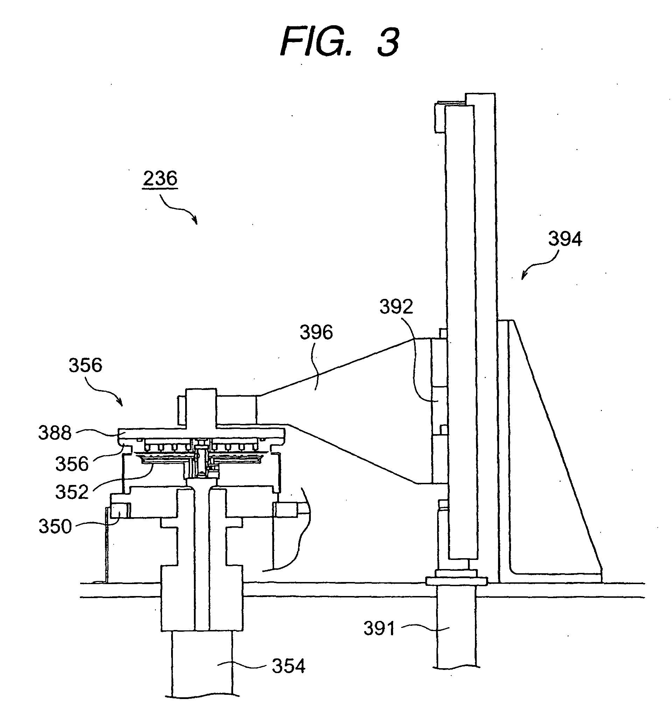

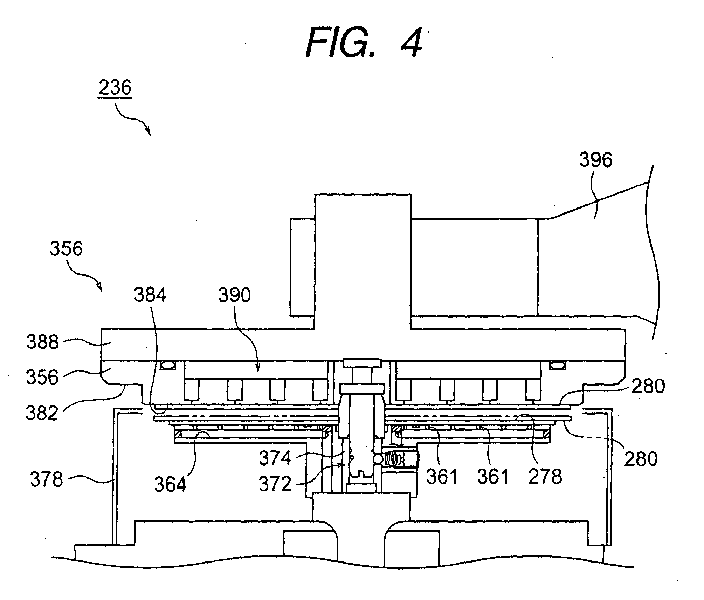

Figure 2 is an enlarged view of the stamper attaching portion in Figure 1, Figure 3 is the BB sectional view in Figure 2, and Figure 4 is an enlarged view of the essential portion in Figure 3.

As shown in these drawings, the stamper attaching portion 236 is provided with a discoid attaching table 350 which can be rotated by 180° by a not-illustrated cam unit. Moreover, the attaching table 350 is provided with a pair of spinner tables 352 about the rotation center. Each of the spinner tables 352 is constituted by a discoid conformation similarly to the attaching table and a whirling servomotor 354 is set under the spinner tables 352. Furthermore, the rotating shaft of the whirling servomotor 354 is connected to the central portion of the spinner tables 352 and the spinner tables 352 can be rotated by activating the whirling servomotor 354.

Furthermore, an attaching head 356 and a first UV irradiator 358 that is a temporary-curing irradiation section are set above the attaching table 350 so as to correspond to positions of a pair of spinner tables 352. By combining the attaching head 356 and the first UV irradiator 358 with spinner tables 352 respectively, the stamper attaching portion 236 serving as the stamper attaching apparatus of this embodiment and a temporary-curing UV irradiator 360 are formed.

The spinner table 352 for constituting the stamper attaching portion 236 is described below.

The outside diameter of the discoid spinner table 352 is set to a dimension slightly smaller than the outside diameter of a disk 278 to be attached. Moreover, a 364 headed for the central portion of the spinner table 352 is formed at the side of the spinner table 352. A plurality of attraction ports 361 communicating with the bore 364 are formed on the surface of the spinner table 352 nearby the bore 364. By connecting a not-illustrated disk attraction means (so-called vacuum pump or the like) to the end opening of the bore 364, the inside of the bore 364 is brought into a negative pressure space and attraction is performed from the attraction ports 361 so that the disk 278 can be attracted by the disk spinner table 352. A concave portion (not illustrated) is formed between bores 364 at the back of the spinner table 352 so as to decrease the weight of the spinner table 352.

Furthermore, in the case of the spinner table 352, a cylindrical hollow rubber member 370 constituting a centering member is set so as to protrude from the central portion of the table 352 and a diameter increasing member 372 is set in the hollow rubber member 370. The diameter increasing member 372 is set along the inner wall of the hollow rubber member 370 and a pressing wall 374 movable in the radius direction of the hollow rubber member and a center pin 376 to be protruded upward along the shaft center of the hollow rubber member 370 in the pressing wall 374 are arranged. By lowering the center pin 376 by the first transfer arm 246 having an L-shaped pawl, the diameter of the pressing wall 374 is increased, the hollow rubber member 370 is pressed against the sidewall of the center hole of the disk 278, and the disk 278 is centered for the hollow rubber member 370.

A guide plate 378 is set outside of the spinner table 352 so as to surround the spinner table 352. Moreover, when the guide plate 378 surrounds the spinner table 352, it is possible to prevent dust from coming from the outside of the stamper attaching portion 236 and depositing on the surface of the disk 278 attracted by the spinner table 352.

However, the attaching head 356 forming the stamper attaching portion 236 is constituted as described below.

The attaching head 236 is constituted by a disk having a flange portion 382 and a.stamper setting face 384 for closely contacting the stamper 280 through attraction is formed at the small diameter side of the head 236 facing the spinner table 352. The stamper setting face 384 is formed so that the outside diameter of it becomes slightly larger than the outside diameter of the stamper 280 so that the entire surface of the stamper 280 can be pressed by the attaching head 236.

A depression 390 is formed at the side facing an attaching plate 388 combined to vertically move the attaching head 236 at the opposite side to the stamper setting face 384 on the attaching head 236 to form an air attracting route connected to stamper attracting means (so-called vacuum pump or the like not illustrated) set to the attaching plate 388 by setting the attaching head 236 to the attaching plate 388. A plurality of depressions 390 respectively have a small diameter from the contact side with the attaching plate 388 up to the stamper setting face 384. Thus, it is possible to improve the close contact degree of the stamper 280 with stamper setting face 384 by attracting the stamper 280 contacting with the stamper setting face 384 by a plurality of small-diameter holes and prevent the stamper 280 from deforming due to the holes. In the case of the above attaching head 236, the depression 390 has a complex shape. Therefore, it is allowed to form the attaching head 236 by not only a method of machining the attaching head 236 but also a sintering method.

A ball screw connecting with a vertically-moving servomotor 391 and a single-axis unit 394 constituted by a vertically-moving stage 392 capable of reciprocally moving in accordance with the rotation of the ball screw are vertically set to the side of the attaching head 236 thus constituted. Moreover, a connecting arm 396 is set between the vertically-moving stage 392 and the attaching plate 388 to vertically move the attaching plate 388 together with the vertically-moving stage 392.

A dispenser 398 having a discharge nozzle 397 at its front end is set to a position not interfering with the single-axis unit 394 around the spinner table 352. In this case, a ball screw mechanism 400 serving as reciprocally moving means through servomotor driving is set to the dispenser 398. The dispenser 398 is advanced by activation of the ball screw mechanism 400 so that a radiation-curing resin which becomes a resin by the discharge nozzle 397 can be applied to the inner margin of the disk 278.

Rotation of the above-described attaching table 350, the whirling servomotor 354, vertically-moving servomotor 391, disk and stamper attracting means, and dispenser 398 are all connected to not-illustrated first control means and rotation and vertical movement or the like are performed in accordance with an activation signal from the control means.

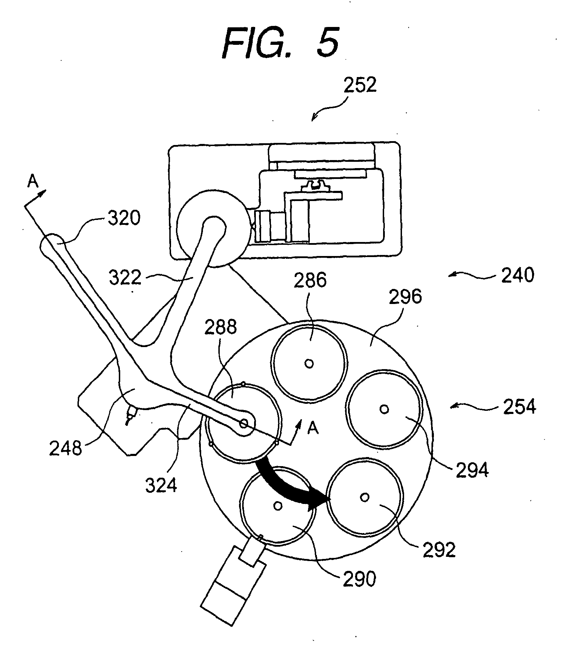

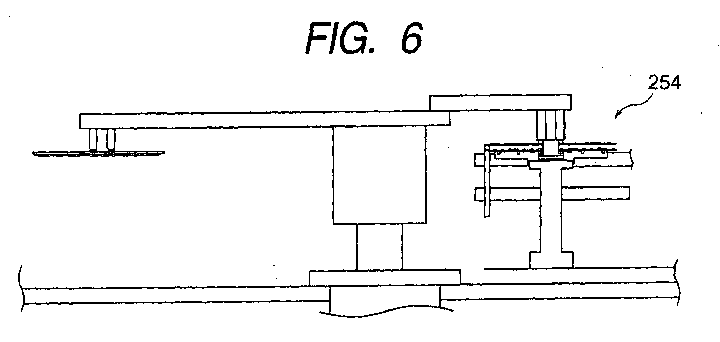

Figure 5 is an enlarged view of the stamper removing portion in Figure 1 and Figure 6 is a sectional view taken along the line A-A in Figure 5.

As shown by these drawings, the stamper removing portion 240 is constituted by the removing station 252 and the carrying table portion 254. Moreover, a disk and stamper attached together are first carried to the removing station 252 and here, a cut is applied to the attaching portion between the disk and stamper. Then, the disk and stamper are carried to the carrying table 254, here the stamper is removed from the disk, and the end face of the removed disk is polished. Carrying from the removing station 252 to the carrying table portion 254 is performed in accordance with the rotation and vertical movement of the above-described second transfer arm 248.

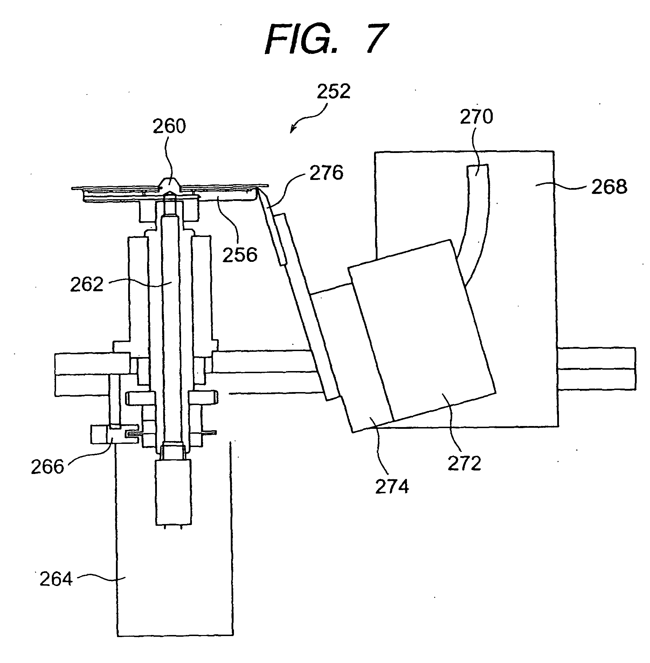

Figure 7 is a side view showing a structure of a removing station.

As shown in Figure 7, in the case of the removing station 252, the table 256 capable of performing vacuum attraction set to the dimension almost equal to the outside diameter of a disk is set at the uppermost portion of the station 252. Moreover, the positioning pin 260 to be fitted with center holes of a disk and a stamper is protruded from the center of the table 256. By fitting the disk and stamper to the positioning pin 260, it is possible to position the disk to the table 256 and fix the disk or the like to the table side through vacuum attraction by brining the back of the disk into close contact with the surface of the table 256.

Moreover, in the case of the table 256, the disk rotating motor 264 is set to the opposite side to the positioning pin 260 through the rotating shaft 262. Therefore, by rotating the disk rotating motor 264, the torque generated by the disk rotating motor 264 is transferred to the table 256 through the rotating shaft 262 so that the disk fixed through vacuum attraction can be rotated about the positioning pin 260 together with the table 256. Furthermore, an optical sensor 266 for detecting the rotation of the disk rotating motor 264 (or it is allowed to use other type of sensor) is set to the middle of the rotating shaft 262 and a cutter to be described later is advanced or backed in accordance with a value from the optical sensor 266.

Furthermore, an angle adjusting portion 268 is set to a side of the table 256. A guide rail 270 curved like a circular arc is set to the angle adjusting portion 268 and a stage 272 capable of moving along the guide rail 270 is set to the portion 268. The curved shape of the guide rail 270 is set so that the cutting edge of a cutter to be described later reaches the boundary between a disk and a clamper at any angle when the guide rail 270 is fixed onto the stage 272 to advance the cutter.

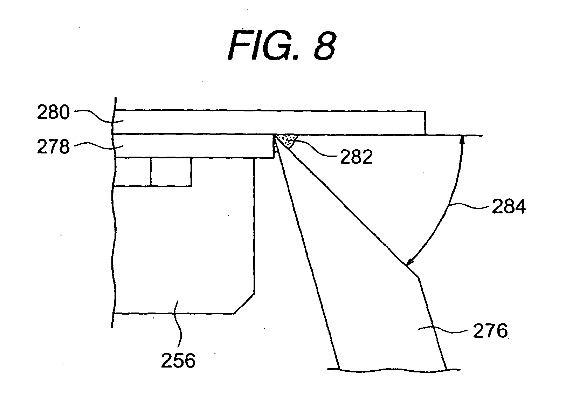

A cylinder 274 serving as a reciprocally moving portion is set on the stage 272 and a cutter 276 is set to the cylinder 274. Therefore, when extending the cylinder 274, the cutter 276 advances together with the cylinder 274 and the cutting edge of the cutter 276 reaches the boundary between the disk and the stamper fixed to the table 256. Figure 8 is an enlarged view of an essential portion showing a state in which the cutting edge of a cutter reaches the boundary between a disk and a stamper. As shown in Figure 8, in the case of the disk 278 and stamper 280 attached together by using the spin coating method, a member for forming a resin layer is protruded to the outer margin of the disk 278 and is cured to serve as an extra portion 282. Therefore, the extra portion 282 is located so as to fill the boundary between the disk 278 and stamper 280. When removing the stamper 282 from the disk 278 without removing the extra portion 282, a force for dividing the extra portion 282 is necessary. As shown in Figure 8, however, the cutter 276 is inserted into the extra portion 282 to make the cutting edge of the cutter 276 reach the boundary, the disk rotating motor 264 is driven and a partial region of the extra portion 282 is shaved by the cutter 276 by rotating the disk and the like at least one turn or more together with the table 256 to expose the boundary. Thus, by forming a cut on the extra portion 282 by the cutter 276, the extra portion 282 is divided. Therefore, when removing the stamper 280, it is possible to prevent the extra portion 282 influencing a removing strength.

When forming a cut on the extra portion 282, it is preferable to set the attitude of the cutter 276 so that an angle 284 at which the cutter 276 and stamper 280 cross becomes maximum. Thus, by increasing the angle 284, it is possible to positively leave a residual portion of the extra portion 282 on the stamper 280 and easily remove the residual portion together with the stamper 280 in a subsequent step. Moreover, a not-illustrated diselectrifying nozzle is set nearby the cutter 276. When the cutter 276 works, static electricity generated at a cut is removed by blowing air to the cutting edge of the cutter 276.

As shown in Figure 5, the carrying table portion 254 has a receiving portion 286 for receiving the disk 278 and stamper 280, a stamper removing portion 288 for removing the stamper 280 from the disk 278, an end face treating portion 290 for treating an end of the removed disk, a film thickness inspecting portion 292 for measuring the film thickness of a resin layer formed on the surface of the disk 278, and a discharging portion 294 for delivering the disk 278 from the carrying table portion 254 to a disk discharging portion 242.

Moreover, carrying of a disk and the like from the receiving portion 286 up to the disk discharging portion 294 is performed in accordance with the rotation and vertical movement of a carrying table 296 and carrying of a disk and the like from the removing station 252 to the carrying table 254 and removal of the stamper 280 removed from a disk are performed by the second transfer arm 248.

A positioning pin for positioning the disk 278 and stamper 280 is set to the central portion of the receiving portion 286 of the carrying table 254. Moreover, the disk 278 and the like present at the removing station 252 are moved to the receiving portion 286 by activating the second transfer arm 248 so that the disk 278 and the like can be held in the receiving portion 286 by using the positioning pin.

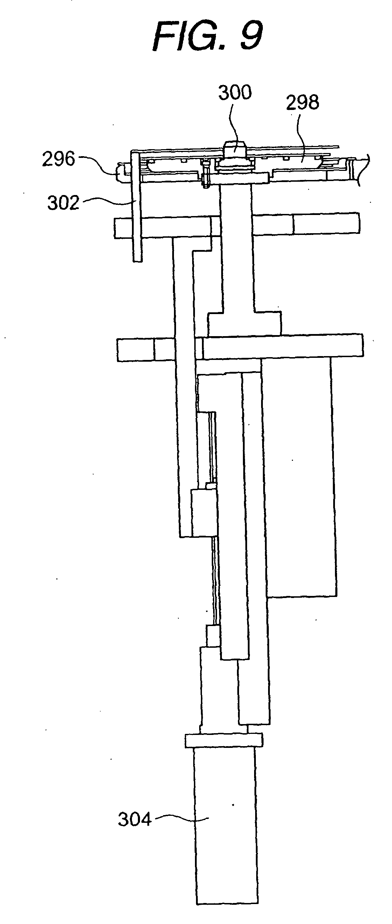

Figure 9 is a local side view showing a structure of a stamper removing portion. As shown in Figure 9, a table 298 capable of performing vacuum attraction having a dimension slightly smaller than the outside diameter of a disk is set to the top of the stamper removing portion 288 similarly to the case of the removing station 252. Moreover, a positioning pin 300 making it possible to be fitted to center holes of a disk and a stamper is protruded from the center of the table 298. By fitting the disk 278 and stamper 280 to the positioning pin 300, the disk is positioned to the table 298 and the disk and the like can be fixed to the table through vacuum attraction by brining the back of the disk into close contact with the surface of the table 298. Moreover, three removing pins 302 are set at intervals of 120° in a range between the outside diameter of the disk 278 or more and the outside diameter of the stamper 280 or less at the outside of the table 298. These removing pins 302 are connected to a servomotor 304 set below the table 298. By activating the servomotor 304, front ends of the removing pins 302 can be vertically moved at the both sides of the height of the table 298. The removing pins 302 arranged at three places on the outer periphery of the disk 278 can be vertically moved by the single servomotor 304 but front ends of the pins 303 are set so that heights of the front ends differ. Moreover, control means serving as not-illustrated second control means is connected to the servomotor 304. Therefore, it is possible to adjust the speed of the servomotor 304 by the control means and the speed of the removing pins 302 pressing the stamper 280 can be optimally adjusted.

Furthermore, when activating the servomotor 304 in accordance with a signal from the control means and raising these removing pins 302, a first removing pin 302a first contacts with the surface of the stamper 280.

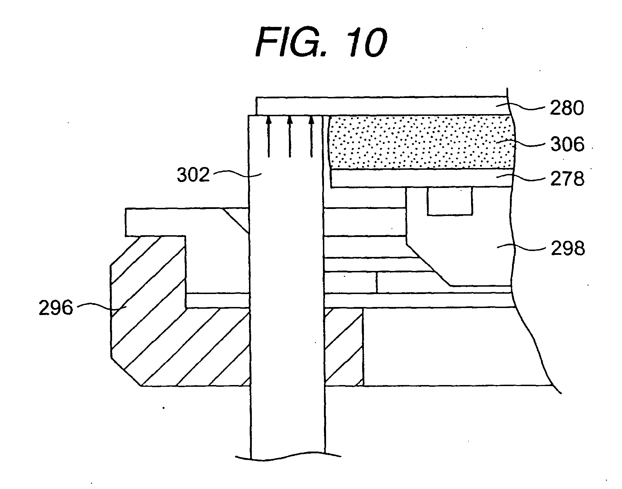

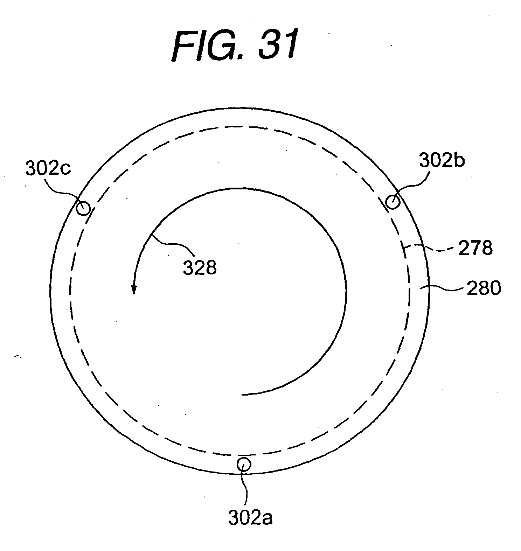

Figure 10 is an enlarged view of the essential portion in Figure 9 showing a state immediately after a removing pin contacts with a stamper. As shown in Figure 10, when the first removing pin 302a contacts with the stamper 280 and then, the stamper 280 is pressed, the stamper 280 is removed from the resin layer 306 and exposure of the surface of the resin layer 306 is started. Then, the removing pin 302a rises and when the removal between the stamper 280 and resin layer 306 advances by a certain degree or more, a second removing pin 302b (refer to Figure 31) starts to contact with the surface of the stamper 280 and presses a position separate from the first removing pin 302. Moreover, at the position of the second removing pin 302b, the removal between the stamper 280 and resin layer 306 advances by a certain degree or more, a third removing pin 302c (refer to Figure 31) starts to contact with the surface of the stamper 280 and removes the stamper 280 together with the first and second removing pins.

Thus, because removing pins continuously contact along the outer margin of the stamper 280, removal of the stamper 280 occurs along the go-around direction of the resin layer 306. Therefore, because removal of the stamper 280 is performed correspondingly to a groove structure formed on the surface of the resin layer 306, it is possible to restrain that the irregularity of the stamper 280 interferes with the groove structure of the resin layer and form a uniform groove structure on the resin layer.

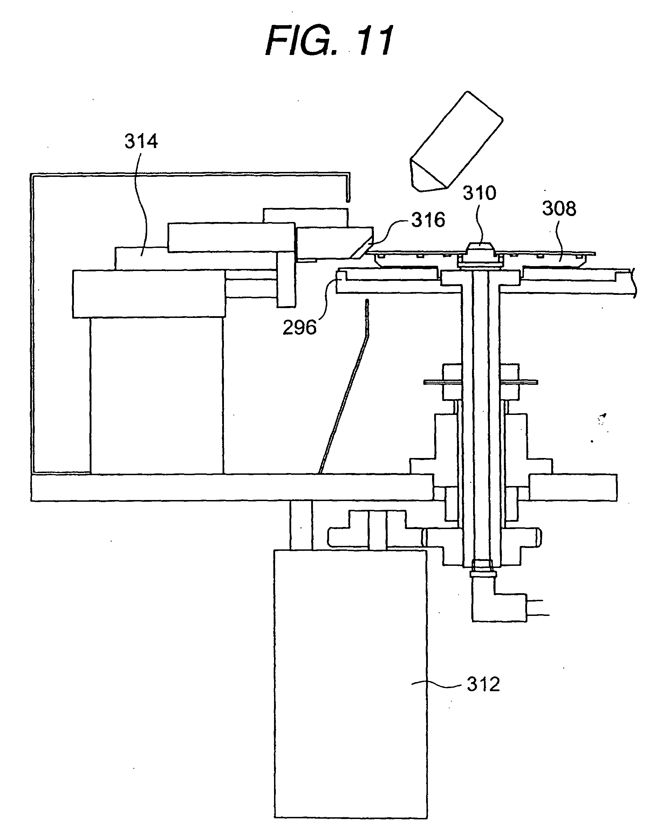

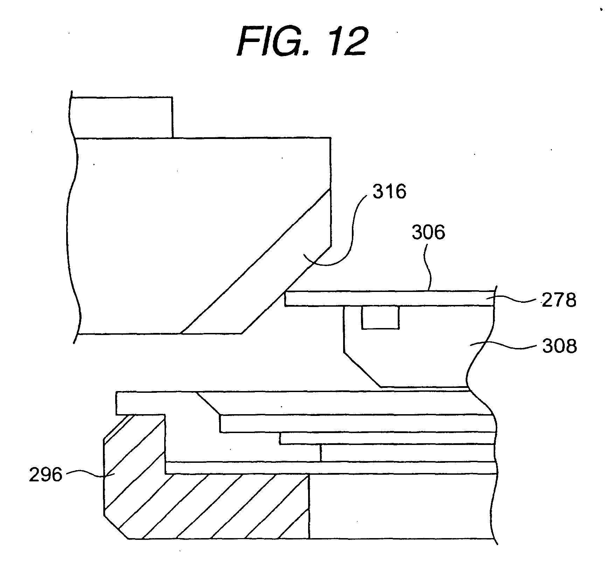

Figure 11 is a side view showing a structure of an end face treating portion and Figure 12 is an enlarged view of the essential portion in Figure 11.

As shown in these drawings, a table 308 capable of performing vacuum attraction and having a dimension slightly smaller than the outside diameter of a disk is set to the top of the end face treating portion 290 similarly to the case of the stamper removing portion 288 and removing station 252. Moreover, a positioning pin 310 making it possible to be fitted with center holes of a disk and a stamper is protruded from the center of the table 308. By fitting the removed disk 278 to the positioning pin 310, the disk 278 is positioned to the table 308 and the disk can be fixed to the table side through vacuum attraction by bringing the back of the disk 278 into close contact with the surface of the table 308. Moreover, a disk rotating motor 312 is set to the lower side of the table 308 and the disk rotating motor 312 and the table 308 are mutually connected through a power transmission mechanism. Therefore, by activating the disk rotating motor 312, the table 308 to which the disk 278 is attracted is rotated.

Furthermore, a cutter forward-backward-moving cylinder 314 serving as a reciprocally moving portion and a cutter 316 serving as a chambering portion mounted on the cutter forward-backward-moving cylinder 314 are set to a side of the table 308. Then, by reciprocally moving the cutter forward-backward-moving cylinder 314, the cutter 316 can be pressed against the resin layer 306 on the outer margin of the disk 278. Thus, by chamfering the resin layer 306 at the outer margin of the disk 278 the end face treatment of the resin layer 306 is performed and it is possible to shave the extra portion 282 remaining on the outer margin end face of the disk 278.

Diselectrifying nozzle 317 is set above the disk 278 and a not-illustrated exhaust duct is set to the opposite side to the disk 278. Therefore, while the end face treatment of the disk 278 is performed by the cutter 316, air is blown from the diselectrifying nozzle 317 to the disk 278 to blow away shaved powder and eliminate static electricity. Thus, by blowing air, it is possible to prevent shaved powder from attaching to the surface of the disk 278 (that is, surface of the resin layer 306). It is allowed that the shaved powder blown away by the air is discharged to the outside of the apparatus by the exhaust duct.

In the case of a radiation applying portion 238 set between a stamper attaching portion 236 and the stamper removing portion 240, a moving table for carrying the disk 278 and stamper 280 attached together in the direction shown by an arrow 422 in Figure 1 is set. Moreover, a second UV irradiator 424 is set above the moving table. By applying radiation to the resin layer 210 through the stamper 280 from the second UV irradiator 424, the resin layer 210 is permanently cured. A servomotor is used as the motive power of the moving table to optionally adjust speeds of the disk 278 and stamper 280 mounted on the moving table. Therefore, it is possible to optionally adjust the speed of the moving table in accordance with the type of the resin layer 210 and securely cure the resin layer 210.

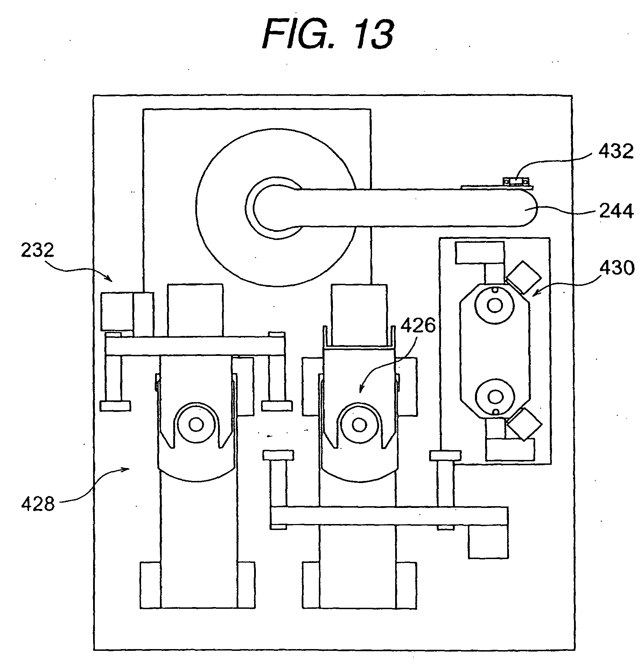

Figure 13 is an enlarged view of an essential portion showing a disk-stamper supplying portion.

As shown in Figure 13, the disk-stamper supplying portion 232 is provided with a disk supplying portion 426 for holding a plurality of disks 278 in the laminated direction and a stamper supplying portion 428 for holding a plurality of stampers 280 in the laminated direction. Moreover, these supplying portions raises the lower disk 278 and stamper 280 in accordance with takeout of the disk 278 and stamper 280 by a supplying arm 244 so that the disk 278 and stamper 280 can be always taken out by the supplying arm 244.

In the case of the disk supplying portion 426 and stamper supplying portion 428, ring spacers having the same inside diameter are used in order to secure a space between disks and a space between stampers when holding the disks 278 and stampers 280 in the laminated direction. Therefore, the above supplying arm 244 can take out not only the disks 278 and stampers 280 but also the spacers and a spacer taken out by the supplying arm 244 is sent to a spacer housing portion 430 adjacent to the disk supplying portion 426.

The above-described disk supplying portion 426, stamper supplying portion 428, and spacer housing portion 43 are arranged on the rotation trace of a chuck portion set to the front end of the supplying arm 244. Thus, it is possible to arrange units around the supplying arm 244 so that the disk-stamper supplying portion 232 can be decreased in size. A determining sensor 432 is set to the front end of the supplying arm 244, thereby it is possible to determine the disk 278 and a spacer. For example, even if two spacers enter a portion between disks 278 in the disk supplying portion 426, the determining sensor 432 detects the two spacers and can send them. to the spacer housing portion 430. Moreover, because the supplying arm 244 is driven by a DD(direct drive)-type servomotor, even if arranging a plurality of disk supplying portions 426 or stamper supplying portions 428 or setting another member supplying portion, it is possible to easily add the position.

As shown in Figure 1, a cleaner portion 234 serving as a carrying destination of the disk 278 or stamper 280 held by the supplying arm 244 is set to the opposite side to the disk-stamper supplying portion 232 by holding the supplying arm 244. The cleaner portion 234 has a discoid turntable 434 and a diselectrifying nozzle 436 set above the turntable 434. When diselectrifying air is blown to the surface of the disk 278 or stamper 280 mounted on the turntable 433, the dust attached to the surface is removed. The rotational direction of the turntable 433 is shown by an arrow 438 in Figure 1.

A stamper reversing chuck 440 is set between the above-described cleaner portion 234 and stamper attaching portion 236. The stamper reversing chuck 440 is a place for once holding a disk and a spacer by the first transfer arm 246 when the disk 278 or spacer 280 is carried from the cleaner portion 234 to the stamper attaching portion 236. Moreover, the stamper reversing chuck 440 is provided with a surface-back reversing mechanism. When the stamper 280 is mounted on the stamper reversing chuck 440, the surface-back reversing mechanism holds the stamper 280, reverses the surface and back of the mechanism, and makes the stamper side face the disk 278. It is allowed to use electricity or air for the motive power of the surface-back reversing mechanism.

The disk discharging portion 242 for discharging the disk 278 and stamper 280 is set to the rear stage of the stamper removing portion 240. The disk discharging portion 242 has a non-defective-product housing portion 442 for housing a non-defective disk 278, a defective-product housing portion 444 for housing a defective disk 278, and a spacer supplying portion 446 for supplying a spacer to the non-defective-product housing portion 442. Moreover, sorting of the disks 278 to these housing portions is performed by a discharging arm 250 in accordance with the result obtained from the film thickness inspecting portion 292. The spacer supplying portion 446 can swing in the direction of the arrow 448 in Figure 1 to supply spacers to the non-defective-product housing portion 442 by interlocking with the carrying operation of the discharging arm 250. Not only the stamper removing portion 240 but also the non-defective-product housing portion 442 and defective-product housing portion 444 are arranged on the rotation trace of the chuck portion set to the front end of the discharging arm 250. Therefore, it is possible to arrange units around the arm similarly to the case of the above supplying arm 244 so that the disk discharging portion 242 can be decreased in size.

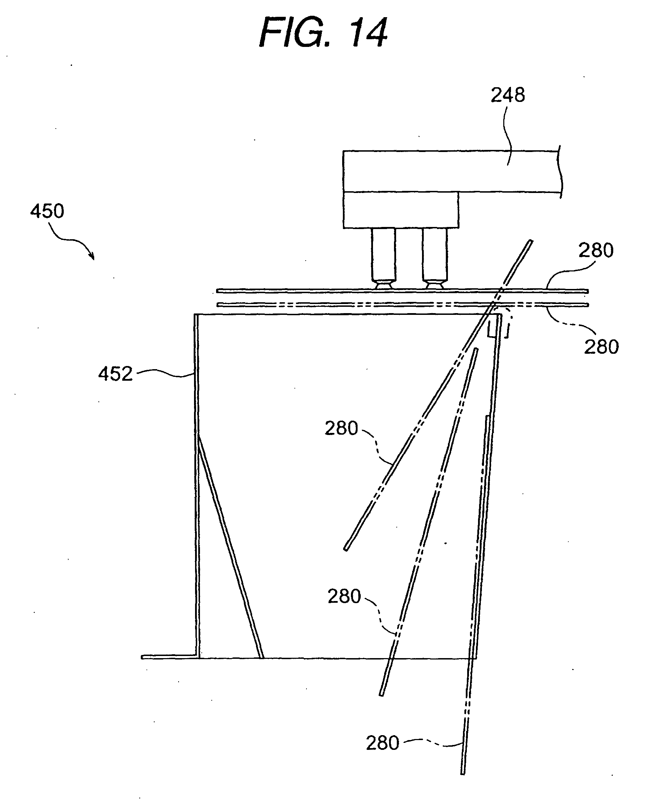

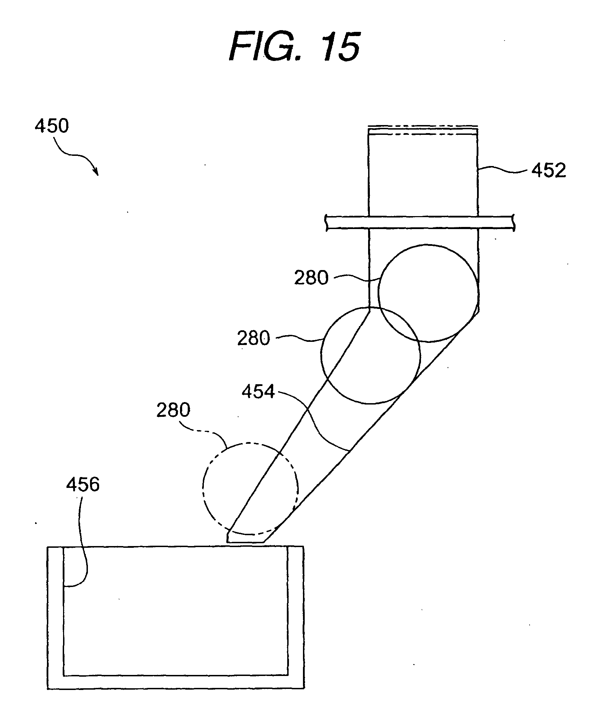

Moreover, a stamper discharging chute 450 for discharging a removed stamper is'set to the outside of the carrying table portion 254 nearby the stamper removing portion 288. Figure 14 is a front view showing a structure of a stamper discharging chute and Figure 15 is a side view showing the structure of the stamper discharging chute. As shown in these drawings, the stamper discharging chute 450 is provided with a stamper guide 452 having an opening below the arm portion of the second transfer arm 248 and a chute portion 454 connected to the stamper guide 452 and a stamper catching box 456 for housing the removed stamper 280 are set below the stamper guide 452. When the arm portion of the second transfer arm 248 is located at the discharge position of the stamper 280, the position of the opening of the stamper guide 452 is set so as to overlap with the outside diameter of the stamper 280. Therefore, when the second transfer arm 248 drops the removed stamper 280 from the arm portion, the stamper 280 contacts with the margin of the opening of the stamper discharging chute 450 and its attitude changes by 90° as shown in Figure 14 and the stamper 280 slips on the slope of the chute portion 454 and it is housed in the stamper catching box 456 set below the chute portion 454.

Thus, by changing the attitude of the stamper 280,and passing the stamper 280 through the chute portion 454 while rolling the stamper 280, it is possible to prevent the stamper 280 from clogging in the chute portion 454, disperse the stampers 280 in the stamper catching box 456, and prevent the stampers 280 from being lopsidedly housed in the stamper catching box 456.

As shown in Figure 1, in the case of the groove forming apparatus 230 of this embodiment, a region including a part of the cleaner portion 234, the stamper reversing chuck 440, and the stamper attaching portion 236 is partitioned and the inside of this region is used as a temperature adjusting region 458 so as to keep the temperature in the region constant. By setting the temperature adjusting region 458, it is possible to keep temperatures of the disk 278, stamper 280, and a radiation-curing resin constant. Therefore, when attaching the stamper 280 to the disk 278, it is possible to prevent a dimension change from occurring due to temperature fluctuation and the interval dimension between the disk 278 and stamper 280 from fluctuating.

In the case of the groove forming apparatus 230, attachment and removal of the stamper 280 to and from the disk 278 are performed between the disk-stamper supplying portion 232 and the disk discharging portion 242. However, steps of performing the above operations are not arranged on a straight line as shown in Figure 1 but they are arranged on rotation traces of the supplying arm 244, first transfer arm 246, second transfer arm 248, and discharging arm 250. Therefore, it is possible to arrange units around these arms and decrease the forming apparatus in size compared to the case of linearly arranging steps. Moreover, as described above, because of setting the temperature adjusting region 458 around the first transfer arm 246, it is possible to narrow the temperature adjusting region 458 and realize energy saving according to the area reduction.

A procedure for attaching and removing the stamper 280 to and from the disk 278 is describe below by using the groove forming apparatus 230 thus constituted.

First, the supplying arm 244 is rotated and the disk 278 and stamper 280 are alternately taken out from the disk supplying portion 426 and stamper supplying portion 428 to move the disk 278 and stamper 280 onto the turntable 434 of the cleaner portion 234. Then, dust is removed from the surfaces of the disk 278 and stamper 280 by diselectrifying air and then, the disk 278 and stamper 280 are transferred to the stamper attaching portion 236 by the first transfer arm 246 through the stamper reversing chuck 440.

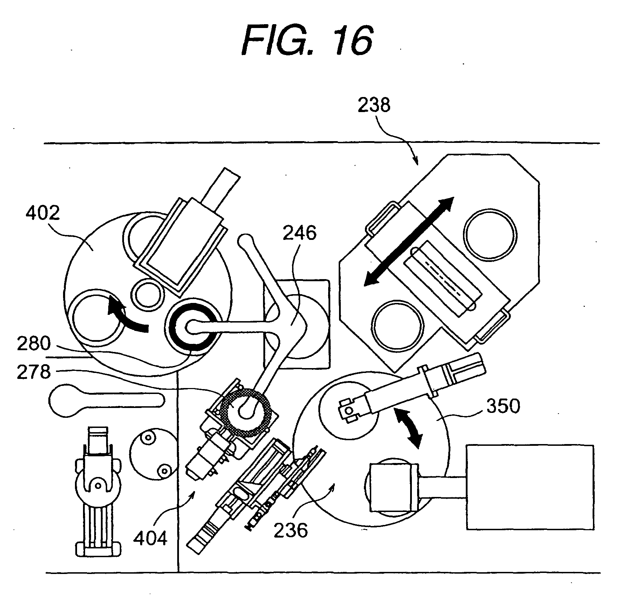

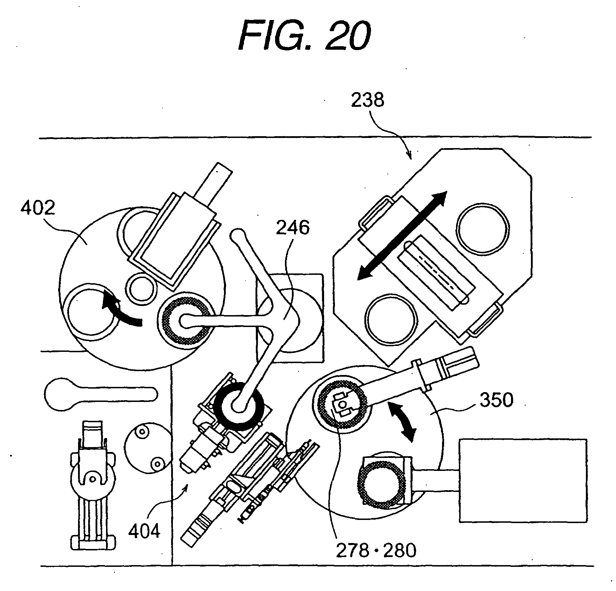

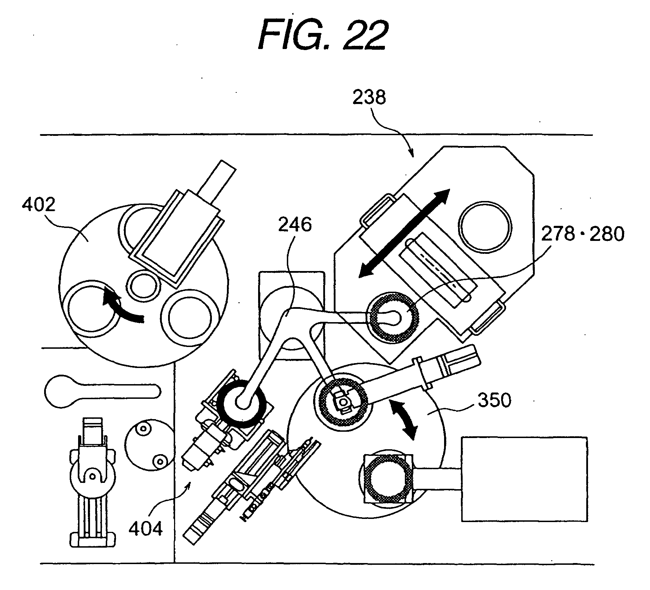

Figures 16 to 22 are a state illustration showing a state in which a disk and a stamper pass through a stamper attaching portion.

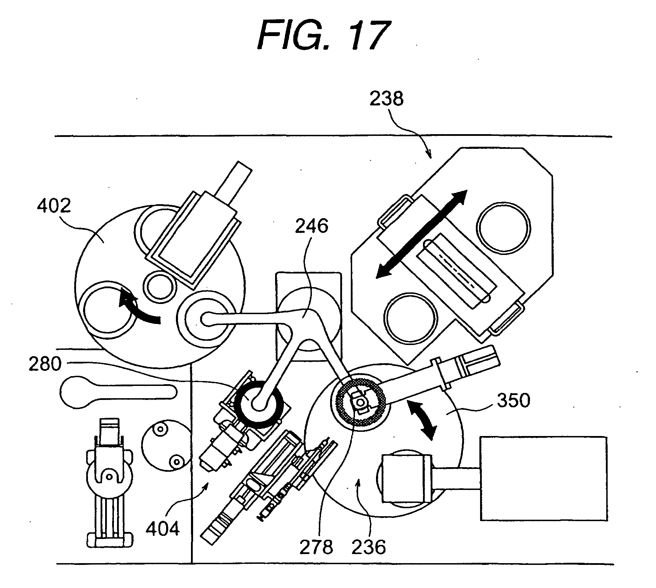

First, as shown in Figure 16, the disk 278 is transferred to a stamper reversing chuck 404 from the cleaner portion 234 by using the first transfer arm 246. Then, as shown in Figure 17, the disk 278 held by the stamper reversing chuck 404 is transferred to the spinner table 352 by rotating the first transfer arm 246 again and the stamper 280 mounted on the cleaner portion 234 is transferred to the stamper reversing chuck 404. The first transfer arm 246 can vertically move (paper thickness direction in Figure 17) in accordance with its rotation. Therefore, the arm portion of the first transfer arm 246 presses the center pin 376 protruded from the spinner table 352 when the first transfer arm 246 lowers and the pressing wall 374 expands in the diameter direction' when the center pin 376 lowers to press the inner wall of the center hole of the disk 278 through the hollow rubber member 370. Therefore, the disk 278 is centered so as to coincide with the rotation center of the spinner table 352 and the disk 278 is brought into close contact with the surface of the spinner table 352 in accordance with the negative pressure by the disk attracting means. The control means determines that the disk 278 is mounted on the spinner table 352 in accordance with the rotation of the first transfer arm 246 and then, activates the disk attracting means, and attracts the disk 278.

Thus, after attracting the disk 278 by the spinner table 352, the control means activates the ball screw mechanism 400 and advances the dispenser 398. Moreover, when the discharge nozzle 397 set to the front end of the dispenser 398 reaches the inner margin side of the disk 278, it stops the ball screw mechanism 400, rotates the disk 278 by activating the whirling servomotor 354, discharges a radiation-curing resin from the front end of the discharge nozzle 397, and applies the radiation-curing resin to the inner margin side of the disk 278. Then, after applying the radiation-curing resin by a previously set quantity, it is only necessary to move the dispenser 398 backward from the disk 278 up to the original position by activating the ball screw mechanism 400 again.

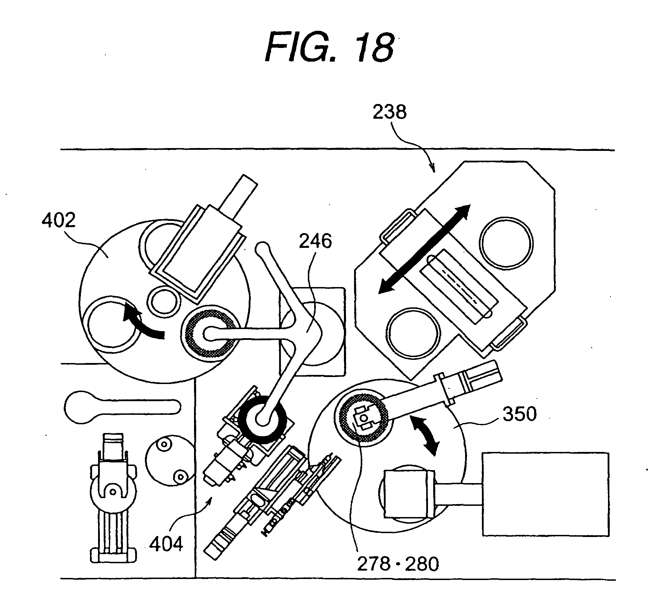

Thus, after applying the radiation-curing resin to the inner margin side of the disk 278, the stamper 280 is put above the disk 278 from the stamper reversing chuck 404 by rotating the first transfer arm 246 again. Thus, when the stamper 280 is released from the first transfer arm 246, the center hole of the stamper 280 contacts with the outer surface of the hollow rubber member 370 whose outside diameter is expanded by the pressing wall 374 and the stamper 280 is held by the hollow rubber member 370 while keeping a sufficient distance from the disk 278. Figure 18 shows a state in which the disk 278 overlaps with the hollow rubber member 280. The attaching head 356 constituting the stamper attaching portion 236 together with the spinner table 352 waits above so as to have a sufficient distance from the spinner table 352. Therefore, even if the first transfer arm 246 moves to the upper portion of the spinner table 352, the height-directional position of the arm 246 becomes the lower side of the attaching head 356 and it is possible to prevent that the both interfere each other.

When the stamper 280 is held above the disk 278, the control means activates the vertically-moving servomotor 391 and lowers the attaching head 356 toward the stamper 280 together with the vertically-moving stage 392, connecting arm 396, and attaching plate 388.

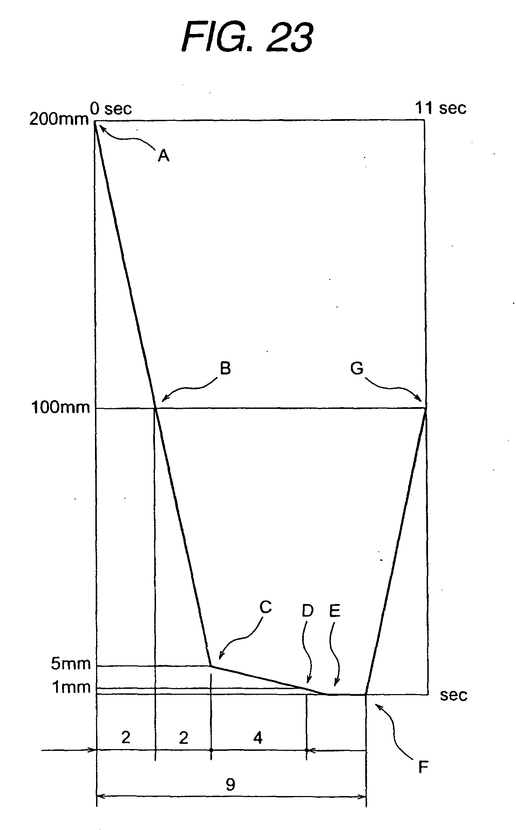

Figure 23 is a graph showing a relation between lowering distances of an attaching head and times. The height of the attaching head 356 from the stamper attaching position is set to 200 mm as shown by the point A in Figure 12 when the first transfer arm 246 enters the upper portion of the spinner table 352. Moreover, the attaching head 356 lowers from the position of the point A up to the automatic operation waiting position (100 mm) shown by a point B in 2 sec and then, lowers from the position of the point B up to the contact position (5 mm) with the stamper 280 shown by a point C in 2 sec. Thus, after bringing the attaching head 356 into contact with the stamper 280, the descending speed is decreased to lower the head 356 up to the stamper attaching height shown by a point E at a constant speed. In this case, when the stamper 280 located at the middle of the hollow rubber member 370 lowers together with the attaching head 356, the stamper 280 is centered by the hollow rubber member 370 at the height of a point D (1 mm) the same as the case of the disk 278. It is possible to optionally set the height of the point D in accordance with the specification of the stamper 280 or other reason and it is only necessary to freely set the height in accordance with the expansion degree of the diameter increasing member 372 set inside of the hollow rubber member 370. Moreover, by previously storing the height at which the stamper 280 is centered in the control means (1 mm in the case of this embodiment), when the attaching head 356 reaches the point D, the control means activates the stamper attracting means and attracts the stamper 280 to the stamper setting face 384. The time when the attaching head 356 reaches from the point C to the point D is set to 4 sec.

Thus, when the attaching head 356 reaches the point D, the stamper 280 is centered by the hollow rubber member 370 as described above. Therefore, it is only necessary to attract the stamper 280 to the stamper setting face 384 and lower the stamper 280 up to a previously-set attaching height shown by the point E in Figure 12 while holding the centering position of the stamper 280 (while holding the radius-directional position). The attaching height of the stamper 280 to the disk 278 (so-called clearance) is optionally set to a value between tens of microns and hundreds of microns.

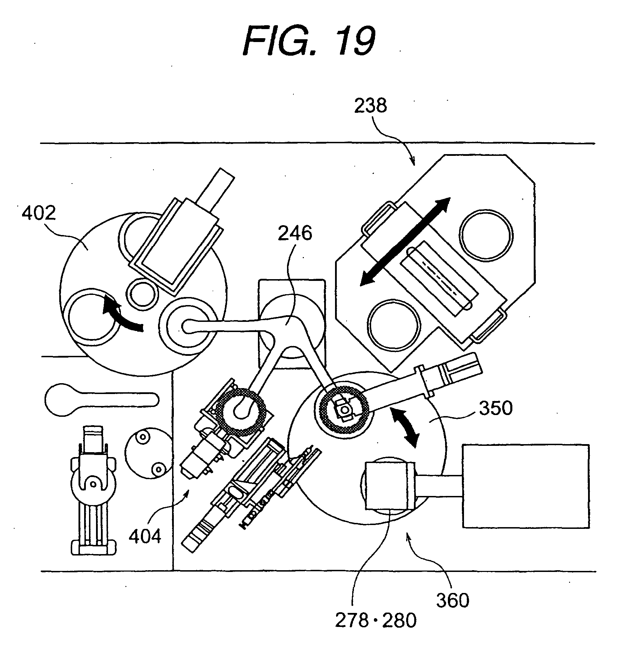

Moreover, after the attaching head 356 reaches the point E and the attaching height of the stamper 280 to the disk 278 is set, the attaching head 356 is raised from a point F to a point G. When raising the attaching head 356, the stamper attracting means is stopped by the control means so that the attaching head 356 can be easily separated from the stamper 280. After raising the attaching head 356 up to the point G, as shown in Figure 19, the attaching table 350 is rotated by 180° and the disk 278 and stamper 280 attached together are moved to the temporary UV irradiating portion 360 together with the spinner table 350. Then, the disk 278 and stamper' 280 attached together are rotated by the temporary UV irradiating portion 360, the diameter of a radiation-curing resin is increased by the centrifugal force of the rotation of them from the inner margin side of the disk outward and the gap between the disk 278 and the stamper 280 is filled with the radiation-curing resin. Then, the first UV irradiator 358 is activated together with the spinning treatment, radiation is applied to the radiation-curing resin through the stamper 280 to cure the radiation-curing resin up to a degree at which the thickness does not' fluctuate (so-called temporary curing step).

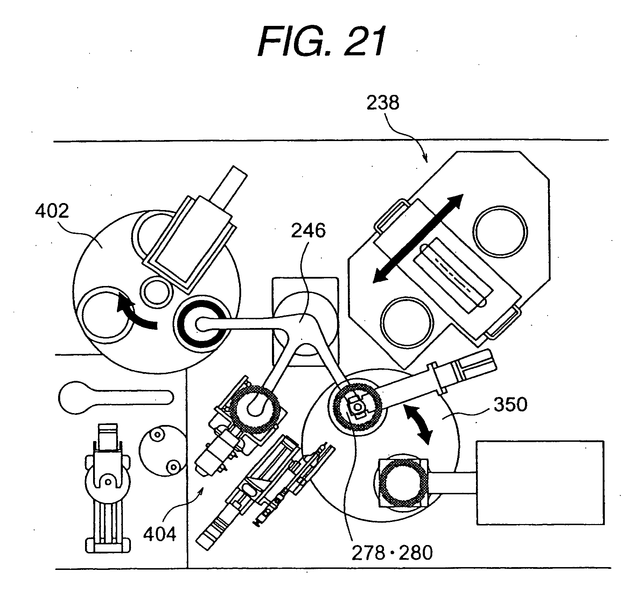

Then, after the temporary curing step is completed, as shown in Figure 21, it is only necessary to rotate the attaching table 350 by 180° again and move the disk 278 and stamper 280 attached together to the stamper attaching portion 236 together with the spinner table 350 and thereafter, hold the disk 278 and stamper 280 by using the first transfer arm 246 and, make the radiation irradiating portion 238 carry the disk 278 and stamper 280, and permanently cure the radiation-curing resin by the radiation irradiating portion 238.

In the above description, a state is described in which one disk 278 (and stamper 280) passes through a stamper attaching portion. However, it is wished to understand that three arm portions set to the first transfer arm 246 simultaneously function and a plurality of disks 278 (and stampers 280) pass through the stamper attaching portion in the case of an actual operation.

In the case of this embodiment, the pressing wall 374 and center pin 376 are set in the hollow rubber member 370 to increase the diameter of the hollow rubber member 370. However, it is also allowed to use another conformation.

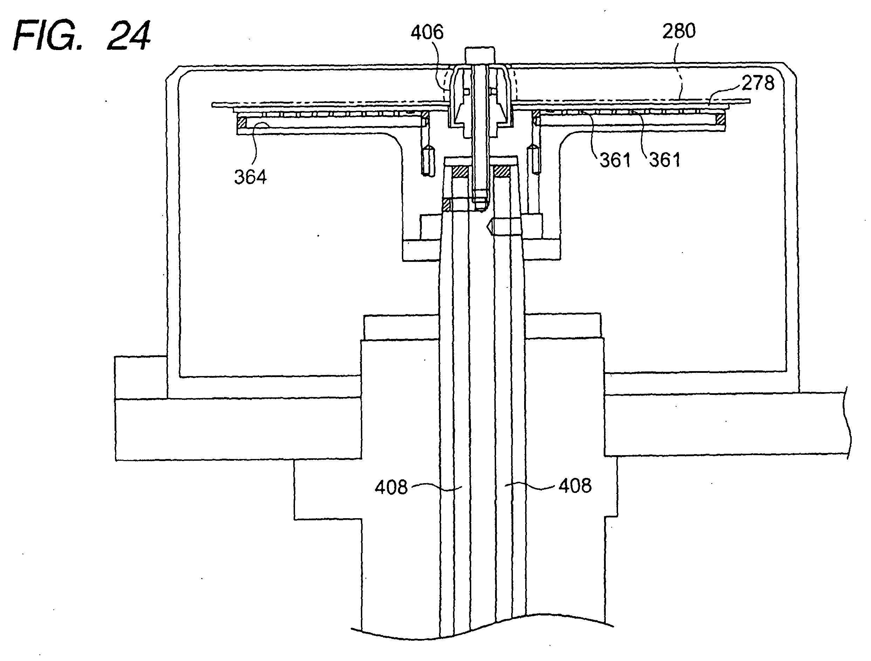

Figure 24 is a sectional view showing another conformation of a centering member. Because portions other than the centering member have the same as those of the above-described spinner table 352, the same number is provided for a common portion and the common portion is described.

As shown in Figure 24, a bag-like hollow rubber member 406 is set to the spinner table 352 so as to protrude from the central portion of the table 352. Moreover, a pair of air pipes 408 to be connected to the hollow rubber member 406 are set below the hollow rubber member 406. The other end of the air pipe 408 is connected to a not-illustrated pressure supplying means. Thus, when connecting the pressure supplying means to the bag-like hollow rubber member 406 through the air pipe, the diameter of the hollow rubber member 406 can be increased by introducing air into the hollow rubber member 406, the outside diameter of the hollow rubber member 406 can be decreased by discharging air from the inside of the hollow rubber member 406, and the disk 278 can be easily centered or taken out. The present inventor used silicon rubber as the material of the hollow rubber member by noticing that the silicon rubber has a characteristic that it is superior in abrasion resistance and it has a small hardness change even if temperatures are changed. However, it is also allowed to select an optional material in accordance with a purpose or operating environment.

A radiation-curing resin is permanently cured by the radiation applying portion 238 and then, the stamper 280 is removed by using the second transfer arm 248.

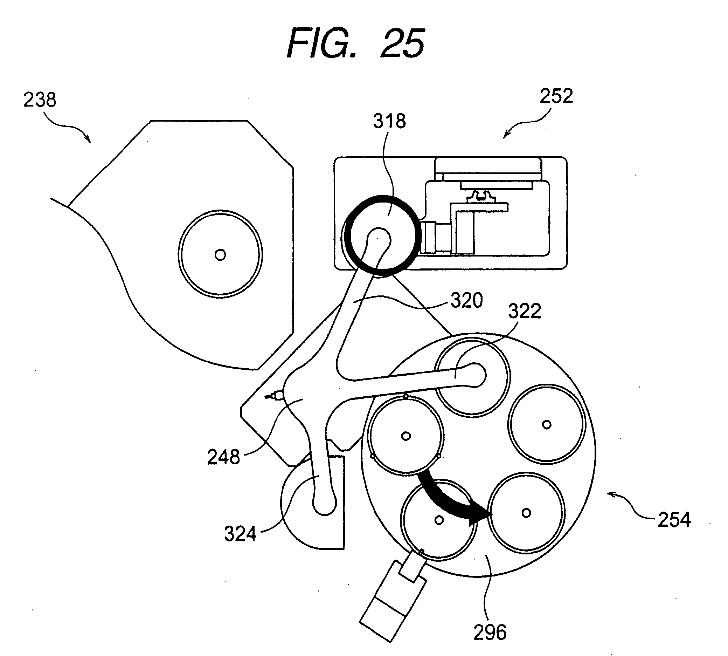

Figures 25 to 30 are state illustrations showing states in which a disk and stamper pass through a stamper removing portion.

First, as shown in Figure 25, the disk and stamper 318 passing through the radiation applying portion 238 are carried from the radiation applying portion 238 to the removing station 252 by rotating the second transfer arm 248 and using a second transfer arm 320. Then, by pressing the cutter 276 against the disk and stamper 318 at the removing station 252 as described above, it is possible to shave the extra portion 282 and expose the boundary between the disk and the stamper.

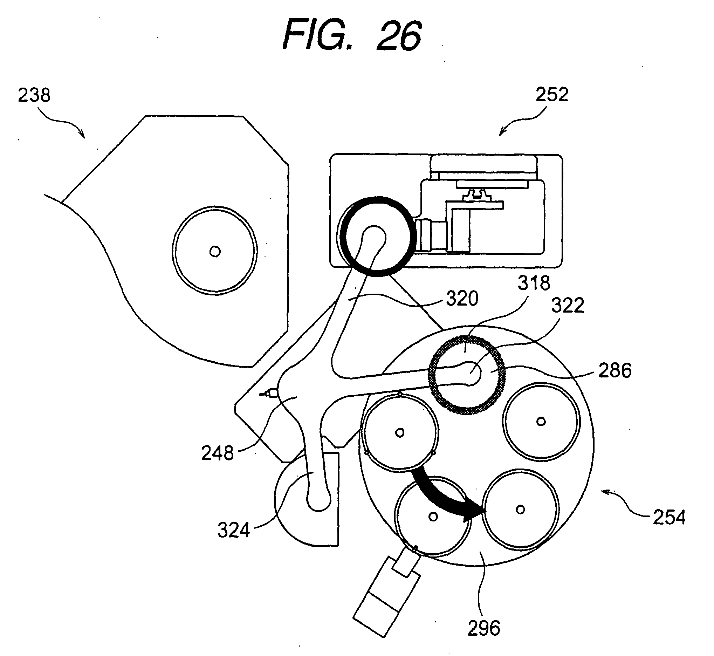

Thus, after shaving the extra portion 282 on the removing station 252 and exposing the boundary between the disk and the stamper, the disk and stamper 318 are carried from the removing station 252 to the receiving portion 286 of the carrying table portion 254 by the second transfer arm 322 of the second transfer arm 248 by rotating the second transfer arm 248. Figure 26 shows a state of the disk and stamper 318 carried to the receiving portion 286.

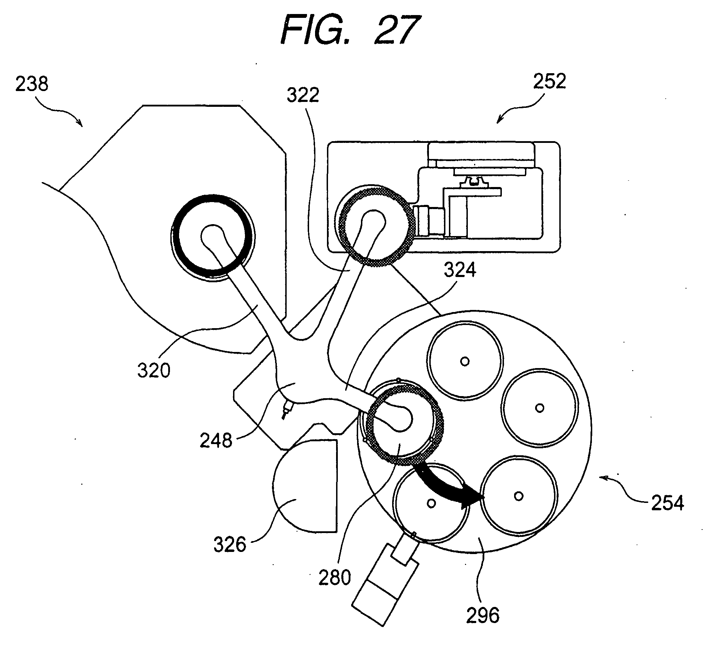

After the disk and stamper 318 are carried to the receiving portion 286, the carrying table 296 raises the disk and stamper 318 in accordance with ascent of the carrying table 296 and then the disk and stamper 318 move to the stamper removing portion 288 in accordance with the rotation of the carrying table 296. Thus, when the disk and stamper 318 move to the stamper removing portion 288, the stamper 280 is removed from the disk 278 in accordance with the pressure of the removing pin 302 against the stamper 280 as described above. Then, while the removing pin 302 supports the stamper 280 removed from the disk 278, the stamper discharging arm 324 of the second transfer arm 248 is lowered from above as shown in Figure 27 to hold only the stamper 280.

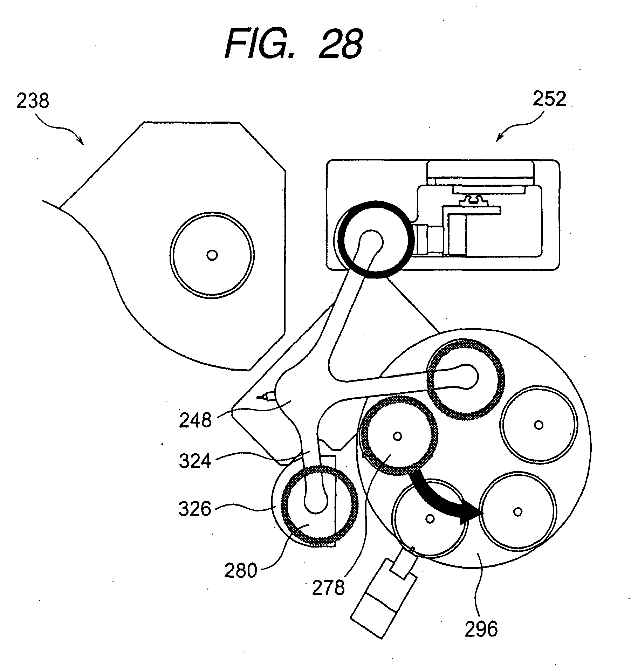

After the removed stamper 280 is held by the stamper discharging arm 324, it is only necessary to move the removed stamper 280 onto a stamper discarding portion 326 set outside of the carrying table 296 and deliver the stamper 280 to the stamper discharging chute 450 as shown in Figure 28.

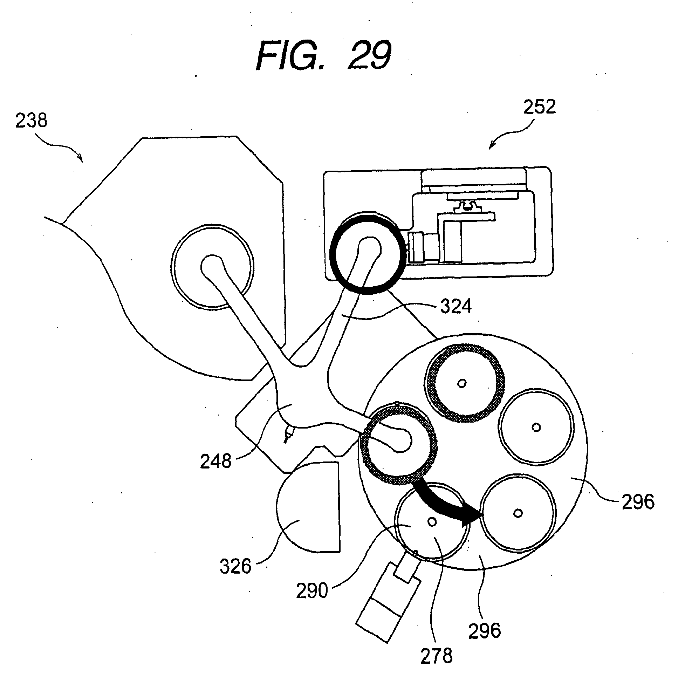

The disk 278 from which the stamper 280 is removed is carried to the end face treating portion 290 which is the rear stage in accordance with the ascent and rotation of the carrying table 296 as shown in Figure 29. Then, in the case of the end face treating portion 290, it is only necessary to press the cutter 316 against the an end face of the disk 278 and remove the extra portion 282 remaining on the end face of the disk 278.

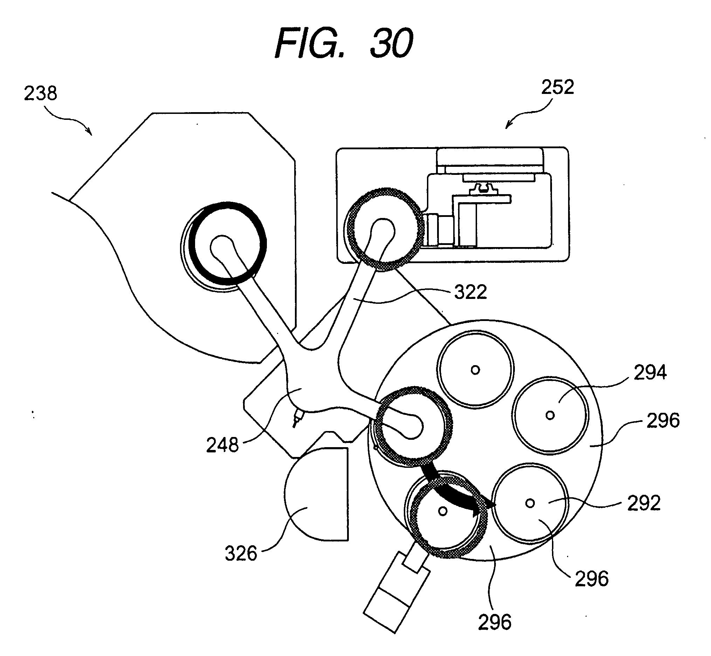

After removing the extra portion 282 remaining on the end face of the disk 278 by the end face treating portion 290, the disk 278 is carried to the film thickness inspecting portion 292 by raising and rotating the carrying table 296 again as shown in Figure 30. Then, the film thickness of the resin layer 306 is inspected by the film thickness inspecting portion 292 to confirm whether the film thickness of the resin layer 306 formed on the disk 278 is kept in a set range. Then, the result is stored in not-illustrated recording means and the disks 278 are carried to the next-stage discharging portion 294. Then, after carrying the disks 278 to the discharging portion 294, it is only necessary to take out the disks 278 from the stamper removing portion 240 by using the discharging arm 250 and divide the disks 278 into non-defective disks 278 and defective disks 278 by the disk discharging portion 242 in accordance with the result obtained from the film thickness inspecting portion 292.

In the above description, a state is shown in which one disk 278 (and stamper 280) pass through the stamper removing portion. In the case of actual operations, however, it is wished to understand that three arms set to the second transfer arm 248 are simultaneously activated and a plurality of disks 278 (and stampers 280) pass through the stamper removing portion.

Figure 31 is an illustration showing a removed state of a stamper. As shown in Figure 31, to remove the stamper 280, the removing pin 302a first contacts with the stamper 280 and then, the removing pin 302b and removing pin 302c successively contact with the stamper 280. Then, the stamper 280 is removed from the disk 278 in accordance with the contact sequence of the removing pins as shown by an arrow 328 in Figure 31. By removing the stamper 280 along the arrow 328, it is possible to prevent adjacent grooves (and lands) from being influenced by the removal of the stamper 280 because the removal is performed along the extension direction of the groove structure formed on the resin layer 306 (and stamper 280).

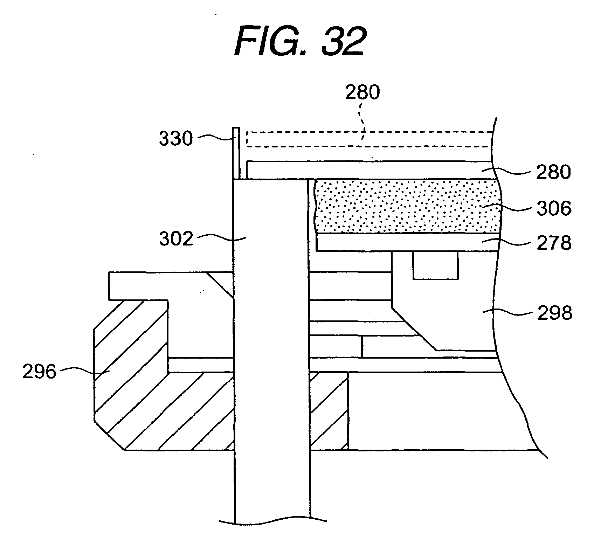

Figure 32 is an enlarged view of an essential portion showing an applied example of a stamper removing portion.

As shown in Figure 32, a protrusion 330 is formed at the outside of the removing pin 302 with which the stamper 280 contacts. By forming the protrusion 330 at the front end of the removing pin 302, even if the stamper 280 is lifted due to release of elastic deformation as shown by a wavy line in Figure 32 when the stamper 280 is removed from the disk 278, the protrusion 330 holds the lifted stamper 280. Therefore, it is possible to prevent a trouble that the stamper 280 confuses its attitude due to the lift and collides with the disk 278. Therefore, a groove structure is securely formed on a multilayer recording medium removed by using the same method and same apparatus and it is possible to improve the reliability.

In the case of this embodiment, a stamper is removed from a disk by suing three removing pins. However, it is also allowed to finely control the removing speed of the stamper 280 by further increasing the number of pins or preparing vertically-moving servomotors equal to the number of removing pins.

Moreover, in the case of this embodiment, it is possible to securely form an information pit and/or a groove structure on the surface of a uniform resin layer because of constituting the groove forming apparatus 230 by using the above stamper attaching portion 236 and stamper removing portion 240. Therefore, it is possible to improve the reliability of a multilayer recording medium formed by the apparatus.

As described above, according to the present invention, it is possible to decrease the apparatus in size because of successively arranging a disk-stamper supplying portion, stamper attaching portion, radiation applying portion, stamper removing portion, and disk discharging portion on the circumference of a plurality of arms and making the arms carry disks and stampers bestriding the arms.

For stamper attachment, a stamper is overlapped on a disk and then, the stamper is lowered to the disk side in accordance with the pressure of an attaching head. Then, the stamper is centered in accordance with fitting with a centering member and attracted by the attaching head. Thus, by setting a clearance of the stamper to the disk in accordance with lowering of the attaching head, it is possible to center the disk and stamper and perform attachment so that a tilt or warpage does not occur between the disk and stamper.

Moreover, in the stamper removing portion, pressure is continuously applied along the circumference of a stamper to remove the stamper from the resin layer along the go-around direction of a disk. Therefore, it is possible to use a small pressure necessary for the pressure pins from the second pressure pin downward because of slowly increasing the removal produced by the first pressure pin. Furthermore, because removal of a stamper is performed in the go-around direction of a disk, that is, along a concentric circle formed on the surface of a resin layer or spiral information pit or groove, the removal direction almost coincides with the array direction of information pits and the tangential direction of a groove structure. Therefore, when an information pit and a groove structure at the stamper side are removed, it is possible to restrain the information pit and groove structure at the resin layer side from interfering with the information pit and groove structure at the resin layer side concave-convex-fitted to the information pit and groove structure at the stamper side and form uniform information pits and groove structures on the resin layer.

## Claims

1. A multilayer recording medium forming method at least comprising:
a stamper attaching step of attaching a stamper on the surface of a disk through a resin layer,
a step of forming the resin layer by applying radiation while rotating the disk and the stamper; and
a stamper step of removing the stamper from the resin layer.

2. The multilayer recording medium forming method according to claim 1, **characterized in that**
the outside diameter of the stamper is larger than that of the disk.

3. The multilayer recording medium forming method according to claim 1 or 2, **characterized in that**
the radiation can pass through the stamper.

4. A multilayer recording medium forming method for successively executing a stamper attaching step of attaching a stamper to the surface of a disk through a resin, a resin layer forming step of filling the clearance in accordance with the expansion of the resin by rotating the disk and the stamper and forming the resin layer by curing the resin, and a stamper removing step of removing the stamper from the resin layer, **characterized in that**
in the stamper attaching step, the disk is fixed to a spinner table while fitting the center hole of the stamper to a centering member protruded from the spinner table, the resin is applied to the inner margin side of the disk and then the centering member is fitted to the center hole, the stamper is overlapped on the disk through the resin and the stamper is lowered up to the disk side in accordance with the pressure of the attaching head, the stamper is centered in accordance with fitting with the centering member and then the stamper is attracted by the attaching head, the clearance of the stamper to the disk is set in accordance with lowering of the attaching head, and the clearance is held by the centering member, and
in the stamper removing step, the disk is fixed, then a pressure working in the stamper removing direction is applied to an optional position of the stamper protruded from the outer margin of the disk, after removal of the stamper from the resin layer is started by the pressure, the pressure is continuously applied along the circumference of the stamper, and the stamper is removed from the resin layer along the go-around direction of the disk.

5. A multilayer recording medium forming apparatus comprising:
a stamper attaching portion for attaching a stamper to the surface of a disk through a resin;
a resin layer forming portion for forming a resin layer by rotating the disk and the stamper, filling the clearance in accordance with expansion of the resin, and curing the resin; and
a stamper removing portion for removing the stamper from the resin layer; **characterized in that**
the stamper attaching portion has,
a spinner table having disk attracting means and capable of entirely attracting the entire either side of the disk,
a centering member protruded from the spinner table to center the disk and the stamper and to hold the protruding direction,
a dispenser having reciprocally moving means and capable of supplying the resin to the inner margin side of the disk,
an attaching head having stamper attracting means and making it possible to entirely attract either side of the stamper and capable of vertically moving on the spinner table, and
first control means for setting a clearance of the stamper to the disk by making the stamper approach the spinner table in accordance with lowering of the attaching head and bringing the stamper in close contact with the attaching head in accordance with activation of the stamper attracting means after the stamper is centered in accordance with fitting of the center hole to the centering member, and
the stamper removing portion has
second control means in which fixing means for holding the disk is used, a plurality of pressure pins are arranged which can vertically move in the stamper removing direction along the circumference of the stamper protruded from the outer margin of the disk, the pressure pins press the stamper along the go-around direction of the disk, and the vertical movement speed of the pressure pins is adjusted.

6. A multilayer recording medium forming apparatus for attaching and removing a stamper to and from a disk having at least one recording layer on a support base material having an information recording face through a resin layer and forming a pit and/or groove structure on the surface of the resin layer, **characterized in that**
a plurality of transfer arms are arranged which rotate the disk and the stamper along the circumference in accordance with the rotation using the proximal end of the arm portion as a rotation center by holding the disk and the stamper at front ends of arm portions,
a disk-stamper supplying portion for supplying the disk and the stamper, a stamper attaching portion for attaching the stamper to the disk, a radiation applying portion for forming a resin layer between the disk and the stamper, a stamper removing portion for removing the stamper from the disk, and a disk discharging portion for discharging the disk and the stamper are arranged on the circumference of the transfer arms in order, and
the disk and the stamper bestriding the transfer arms are carried by the transfer arms.

7. The multilayer recording medium forming apparatus according to claim 6, **characterized in that** a transfer arm has a plurality of arm portions to make it possible to simultaneously transfer the disks and the stampers.

8. The multilayer recording medium forming apparatus according to claim 6 or 7, **characterized in that**
the stamper removing portion has a rotatable carrying table portion for housing the disks and the stampers along its go-around direction,
a receiving portion for receiving the disks and the stampers, a stamper removing portion for removing the stampers from the disks, an end face treating portion for treating an end face of a removed disk, and a discharging portion for delivering the disks from the carrying table portion to the disk discharging portion are arranged in order along its go-around direction, and
the stampers are removed along the go-around direction of the carrying table portion.

9. The multilayer recording medium forming apparatus according to claim 6 or 7, **characterized in that**
the stamper attaching portion has a rotatable attaching table for housing the disks and the stampers along its go-around direction and temporarily cures the resin held by the disks and the stampers by setting a temporary-curing radiation applying portion along the go-around direction of the attaching table.

10. The multilayer recording medium forming apparatus according to claim 8, **characterized in that**
the stamper attaching portion has a rotatable attaching table for housing the disks and the stampers along its go-around direction and temporarily cures the resin held by the disks and the stampers by setting a temporary-curing radiation applying portion along the go-around direction of the attaching table.

11. The multilayer recording medium forming apparatus according to claim 9, **characterized in that** at least the stamper attaching portion and the radiation applying portion are controlled so that temperatures of them are kept almost constant.

12. The multilayer recording medium forming apparatus according to claim 10, **characterized in that** at least the stamper attaching portion and the radiation applying portion are controlled so that temperatures of them are kept almost constant.

13. A multilayer recording medium manufactured by the multilayer recording medium forming apparatus of claim 5 or 6.
